# EUROPEAN PATENT APPLICATION

(11) **EP 2 351 716 A1**
(43) Date of publication of application: **03.08.2011**
(21) Application number: 09813113.9
(22) Date of filing: 10.09.2009
(51) Int. Cl.: C03C 3/095, C03C 3/078, C03C 3/083, C03C 3/085, C03C 3/087, C03C 3/091, C03C 3/093, C03C 3/097

(54) **GLASS**

(30) Priority: 10.09.2008 JP 2008232748; 10.09.2008 JP 2008232749
(71) Applicant: Ohara Inc., Chuo-ku Sagamihara-shi Kanagawa 252-5286 (JP)
(72) Inventor: GOTO, Naoyuki, Sagamihara-shi Kanagawa 252-5286 (JP); YAGI, Toshitaka, Sagamihara-shi Kanagawa 252-5286 (JP)
(74) Representative: Maiwald Patentanwalts GmbH
(86) International application number: PCT/JP2009/065827
(87) International publication number: WO 2010/029967

(57) **Abstract**

Disclosed is a low thermal expansion glass which can exhibit both a good refining effect and high processability without containing any As component or any Sb component. The glass comprises an SiO₂ component, an Al₂O₃ component, a CeO₂ component and/or an SnO₂ component, on an oxide basis, wherein the total amount (γ) of the CeO₂ component and/or the SnO₂ component satisfies the relationship represented by the following expression: γ ≥ 0.005α+Aβ²+Bβ+C, wherein α represents the liquidus temperature; β represents the content of a B₂O₃ component; A represents a coefficient of 0 or greater; B represents a coefficient of 0 or greater; and C represents a constant.

## Description

### TECHNICAL FIELD

The present invention relates to a low thermal expansion glass in which content of harmful substances is reduced. Preferably, it relates to a low thermal expansion glass in which chemical resistance is remarkably excellent.

### BACKGROUND ART

Low thermal expansion glass with a low average linear expansion coefficient has been used in a wide range of fields such as substrate materials of accurate instruments and heat-resistant glasses. It is typically difficult for the glass to be defoamed and refined since viscosity of the glass under liquid phase conditions in the melting process is high due to higher content of SiO₂ component. Therefore, the low thermal expansion glass has been provided with a refining effect by including an As component or an Sb component. The As component or the Sb component can provide a high refining effect and thus has been essential for producing the low thermal expansion glass with a less defoaming ability due to higher viscosity of molten glass. However, in recent years, since there has been a high need to exclude harmful substances from glass components, low thermal expansion glass not containing the As component or the Sb component has been demanded.

The low thermal expansion glass exhibits a high viscosity under the state of molten glass and a high liquidus temperature. Therefore, moldability has been improved by lowering the liquidus temperature by including a B₂O₃ component to reduce the viscosity of molten glass to as low as possible or processability of the low thermal expansion glass has been ensured by lowering operating temperatures of melting furnaces. Since the B₂O₃ component has an effect of reducing the viscosity of molten glass while suppressing increase of the average linear expansion coefficient, bubbles can rise within the molten glass to easily escape from the molten glass and thus the glass can be easily refined. On the other hand, since the B₂O₃ component itself is highly volatile, it is likely to cause reboiling (refoaming) when the glass is molten. In this regard, when the As component or the Sb component is used as a defoaming agent, sufficient refinement has been realized by the effect of lowering the viscosity of molten glass while reducing the reboiling due to the B₂O₃ component. However, under the situation that use of the As component or the Sb component is restricted, refinement of glass has become difficult since the reboiling due to the B₂O₃ component cannot be sufficiently suppressed. Therefore, development of the low thermal expansion glass to meet the need in recent years has been very difficult.

Furthermore, in recent years, the low thermal expansion glass has been required to have a low thermal expansion as well as high chemical resistance depending on the application.

However, since the B₂O₃ component degrades the chemical resistance, in some cases, the used amount of the B₂O₃ component is required to be as low as possible or nothing. Furthermore, by reason that the B₂O₃ component is also a harmful substance similarly to the As component or the Sb component, in some cases, the used amount of the B₂O₃ component is required to be reduced. However, in the case that the use of the As component or the Sb component is restricted and also the used amount of the B₂O₃ component is required to be reduced, refinement itself of the glass has become difficult and thus development of the low thermal expansion glass to meet the need in recent years has been very difficult.

Patent Document 1 discloses a low thermal expansion glass having a thermal expansion coefficient of 38×10⁻⁷ °C⁻¹ to 52×10⁻⁷ °C⁻¹ in which the use of the As component or the Sb component is limited. However, the number of bubbles per gram of the glass after melting and slow cooling is large, thus the refining effect is insufficient in view of application to the fields of accurate instruments. Furthermore, because the B₂O₃ component is included, when high chemical resistance is required, the need cannot be sufficiently satisfied.

Patent Document 2 describes examples in which an SnO₂ component or an F component is used while limiting the use of the As component or the Sb component. However, the content of the SnO₂ component in the glass is not of a sufficient content to refine the glass. Furthermore, the F component has a disadvantage in that an environmental problem arises due to generation of F₂ in a melting process and chemical resistance is impaired because it remains in the glass.
[Patent Document 1] Japanese Unexamined Patent Application, Publication No. 2004 - 284949
[Patent Document 2] Japanese Unexamined Patent Application, Publication No. 2005 - 320234

### DISCLOSURE OF THE INVENTION

### Problems to be Solved by the Invention

It is an object of the present invention to provide a low thermal expansion glass in which a good refining effect is obtained even when not containing the As component or the Sb component.

It is a further object of the present invention to provide a low thermal expansion glass in which processability is high in addition to the good refining effect.

It is a further object of the present invention to provide a low thermal expansion glass in which chemical resistance is excellent in addition to the good refining effect.

### Means for Solving the Problems

The present inventors have thoroughly investigated to attain the object described above, as a result, have found that a glass with good refining ability (defoaming ability) can be obtained by including an SiO₂ component and/or an Al₂O₃ component at least as a main component and a CeO₂ component and/or an SnO₂ component as a refining agent (defoaming agent), and by satisfying a certain relationship between the content of the components and the liquidus temperature of the glass, thereby completing the present invention. The specific aspect is as follows:
In a first aspect of the present invention, a glass includes an SiO₂ component, an Al₂O₃ component, a CeO₂ component and/or an SnO₂ component, on an oxide basis, in which the total amount (γ) of the CeO₂ component and/or the SnO₂ component satisfies the relationship represented by the following expression:
   γ ≥ 0.005α+Aβ²+Bβ+C (in which α represents the liquidus temperature; β represents the content of B₂O₃ component; A represents a coefficient of 0 or greater; B represents a coefficient of 0 or greater; and C represents a constant).

The glass of the present invention contains the CeO₂ component and/or the SnO₂ component in place of the As component or the Sb component. When the amount of these components is less, the refining effect cannot be sufficiently obtained; in contrast, when the amount of these components is too high, Sn deposits as metal or the CeO₂ component decreases the transmittance at a short wavelength range of visible light and ultraviolet light range, thus deteriorating the intended properties of the glass.

In the present invention, by adjusting the content of the CeO₂ component and/or the SnO₂ component so that the content of the CeO₂ component and/or the SnO₂ component and the liquidus temperature of the glass satisfy a certain relation, the CeO₂ component and/or the SnO₂ component can be provided in a necessary and sufficient amount.

Preferably, the coefficient A is within the range of 0 to 0.0195. Preferably, the coefficient B is within the range of 0 to 0.015. Particularly, when the content of the B₂O₃ component is less than 0.1%, the coefficient A and the coefficient B are preferably 0. Preferably, the coefficient C is within the range of -5.20 to -5.55.

The glass can be classified into glass I or glass II depending on the case that the coefficient A and the coefficient B are concurrently more than 0 or concurrently 0.

The glass I includes an SiO₂ component, an Al₂O₃ component and/or a B₂O₃ component as a main component and a CeO₂ component and/or an SnO₂ component as a refining agent; and the content of the components, the liquidus temperature of the glass and the content of the B₂O₃ component satisfy a certain relation therebetween, thereby resulting in a glass which satisfies both of good refining ability and high processability. The specific aspect is as follows:

Here, in the case of the glass I, it is most preferable that the coefficient A is 0.0189, the coefficient B is 0.011 and the coefficient C is -5.5 from the viewpoint that reboiling due to the B₂O₃ component can be suppressed and both of good defoaming ability and high processability can be satisfied.

According to a second aspect of the present invention, the glass according to the first aspect includes the SiO₂ component, the Al₂O₃ component, a B₂O₃ component, the CeO₂ component and/or the SnO₂ component, on an oxide basis, in which the total amount (γ) of the CeO₂ component and/or the SnO₂ component satisfies the relationship represented by the following expression:
γ ≥ 0.005α+0.0189β²+0.011β-5.5 (in which α represents the liquidus temperature; and β represents the content of the B₂O₃ component).

According to a third aspect of the present invention, the glass according to the second aspect,
the SiO₂ component is included in an amount of 48% to 65%,
the Al₂O₃ component is included in an amount of 8% to 25% and
the B₂O₃ component is included in an amount of more than 0% to 12% or less, on an oxide basis in % by mass.

According to a fourth aspect of the present invention, the glass according to the second or third aspect,
the CeO₂ component and/or the SnO₂ component is included in an amount of 0.01% to 3%, on an oxide basis in % by mass.

According to a fifth aspect of the present invention, the glass according to any one of the second to fourth aspects includes
a CaO component in an amount of 0% to 5%, and/or
an MgO component in an amount of 0% to 20%, and/or
a BaO component in an amount of 0% to 5%, and/or
a SrO component in an amount of 0% to 5%, and/or
a ZnO component in an amount of 0% to 15%, and/or
a ZrO₂ component in an amount of 0% to 5%, and/or
a TiO₂ component in an amount of 0% to 5% and/or
0% to 10% in a total amount of one or more components selected from a Li₂O component, a Na₂O component and a K₂O component, on an oxide basis in % by mass.

According to a sixth aspect of the present invention, the glass according to any one of the second to fifth aspects includes
in the range of 0% to 7% in a total amount of one or no less than two of Y₂O₃, La₂O₃, Gd₂O₃, Bi₂O₃, WO₃, Nb₂O₅ and Ta₂O₅ on an oxide basis in % by mass.

According to a seventh aspect of the present invention, in the glass according to any one of the second to sixth aspects,
the temperature at which the glass exhibits a viscosity of 10^{2.5} dPa·s is no higher than 1450°C.

The glass II includes an SiO₂ component and/or an Al₂O₃ component as a main component and a CeO₂ component and/or an SnO₂ component as a refining agent; and the content of the components and the liquidus temperature of the glass satisfy a certain relation therebetween, thereby resulting in a glass which exhibits high chemical resistance and high defoaming ability even when not containing the As component or the Sb component. The specific aspect is as follows:

Here, in the case of the glass II, it is most preferable that the coefficient A is 0, the coefficient B is 0 and the coefficient C is -5.25 from the viewpoint of exhibiting a good refining effect even when not containing the As component or the Sb component and providing the low thermal expansion glass with excellent chemical resistance.

According to an eighth aspect of the present invention, the glass according to the first aspect includes the SiO₂ component, the Al₂O₃ component, the CeO₂ component and/or the SnO₂ component, on an oxide basis in % by mass, in which the content of the B₂O₃ component is less than 0.1%, and the total amount (γ) of the CeO₂ component and/or the SnO₂ component satisfies the relationship represented by the following expression:
γ ≥ 0.005α-5.25 (in which α represents the liquidus temperature).

According to a ninth aspect of the present invention, the glass according to the eighth aspect,
the SiO₂ component is included in an amount of 45% to 68% and
the Al₂O₃ component is included in an amount of 16% to 35%, on an oxide basis in % by mass.

According to a tenth aspect of the present invention, the glass according to the eighth or ninth aspect,
the CeO₂ component and/or the SnO₂ component is included in an amount of 0.01% to 3%, on an oxide basis in % by mass.

According to an eleventh aspect of the present invention, the glass according to any one of the eighth to tenth aspect includes
an R₂O component in an amount of less than 5% on an oxide basis in % by mass, in which R represents one or more of Li,
Na and K.

According to a twelfth aspect of the present invention, the glass according to any one of the eighth to eleventh aspects includes
a P₂O₅ component in an amount of 0% to 10%, and/or
an MgO component in an amount of 0% to 12%, and/or
a CaO component in an amount of 0% to 12%, and/or
a SrO component in an amount of 0% to 8% and/or
a BaO component in an amount of 0% to 8%, on an oxide basis in % by mass.

According to a thirteenth aspect of the present invention, the glass according to any one of the eighth to twelfth aspects includes
a ZrO₂ component in an amount of 0% to 5%, and/or
a ZnO component in an amount of 0% to 5%, and/or
a TiO₂ component in an amount of 0% to 5%, and/or
0% to 7% in a total amount of one or more components selected from Y₂O₃, La₂O₃, Gd₂O₃, Nb₂O₅, Ta₂O₅, Bi₂O₃ and WO₃ components, on an oxide basis in % by mass.

In addition, both of the glass I and the glass II have the properties shown below.

According to a fourteenth aspect of the present invention, in the glass according to any one of the first to thirteenth aspects,
the average linear expansion coefficient of from 0°C to 300°C is 25×10⁻⁷ °C⁻¹ to 55×10⁻⁷ °C⁻¹.

According to a fifteenth aspect of the present invention,
the glass according to any one of the first to fourteenth aspects does not contain F, Cl, Br, I, Pb, As or Sb element as a component comprising in the glass.

### Effects of the Invention

In the glass of the present invention, the average linear expansion coefficient of from 0°C to 300°C is in the range of 25×10⁻⁷ °C⁻¹ to 55×10⁻⁷ °C⁻¹ and the defoaming ability is high such that the number of bubbles is no more than 50 per 100 cm³ after shaping the glass.

Particularly, since the temperature at which the glass I exhibits a viscosity of 10^{2.5} dpa·s is no higher than 1450°C, the glass I can be molten and shaped at lower temperatures, thus resulting in high processability.

On the other hand, the glass II has excellent chemical resistance.

### PREFERRED MODE FOR CARRYING OUT THE INVENTION

The compositional components to form the glass of the present invention are discussed. In this connection, contents of the components are expressed on an oxide basis in % by mass. Here, the terminology of "on an oxide basis" relates to a way to express the composition of the components in the glass assuming that all of oxides, nitrates, etc. used as raw materials of the components to form the glass of the present invention are decomposed into oxides when they are molten, and the amounts of components are expressed supposing that the total mass of the resulting oxides is 100% by mass.

The glass of the present invention includes an SiO₂ component, an Al₂O₃ component, a CeO₂ component and/or an SnO₂ component, on an oxide basis, and the total amount (γ) of the CeO₂ component and/or the SnO₂ component satisfies the relationship represented by the following expression: γ ≥ 0.005α+Aβ²+Bβ+C (in which α represents the liquidus temperature; β represents the content of B₂O₃ component; A represents a coefficient of 0 or greater; B represents a coefficient of 0 or greater; and C represents a constant).

The SiO₂ component and/or the Al₂O₃ component are included at least as a main component, the CeO₂ component and/or the SnO₂ component are included as a refining agent (defoaming agent), and a certain relationship between the content of the components and the liquidus temperature of the glass is satisfied, thereby the glass having good refining ability can be obtained.

Preferably, the coefficient A is within the range of 0 to 0.0195. Preferably, the coefficient B is within the range of 0 to 0.015. Particularly, when the content of the B₂O₃ is less than 0.1%, the coefficient A and the coefficient B are preferably 0. Furthermore, the coefficient C is preferably within the range of -5.20 to -5.55.

Here, the terminology of "liquidus temperature" means the temperature at which crystals begin to deposit during the process of cooling a molten glass with no crystal. The liquidus temperature can be measured by observing the molten glass while lowering the temperature and reading the temperature at which crystal crystallization has been confirmed using a hot stage for microscopic observations (Model MS-TPS, manufactured by Yonekura MFG. Co.), for example.

Additionally, the Ce component and the Sn component may have two or more valencies in the glass of the present invention, and these components are converted into CeO₂ and SnO₂ respectively rather than Ce₂O₃, for example, when they are converted on an oxide basis described above.

Next, the glass I is explained below.

The glass I includes an SiO₂ component, an Al₂O₃ component, a B₂O₃ component, a CeO₂ component and/or an SnO₂ component, on an oxide basis, in which the total amount (γ) of the CeO₂ component and/or the SnO₂ component satisfies the relationship represented by the following expression:
γ ≥ 0.005α+0.0189β²+0.011β-5.5 (in which α represents the liquidus temperature; and β represents the content of the B₂O₃ component) .

The SiO₂ component, the Al₂O₃ component and/or the B₂O₃ component is a main component of the low thermal expansion glass, and the CeO₂ component and/or the SnO₂ component brings about an effect as a refining agent.

Then, in relation to the liquidus temperature of the glass which depends on the SiO₂ component, the Al₂O₃ component, and/or the B₂O₃ component and optional components included as necessary, a defoaming agent is included so that the content of the B₂O₃ component and the total amount of the CeO₂ component and/or the SnO₂ component satisfy the relational expression described above, consequently the reboiling due to the B₂O₃ component is suppressed, thereby enabling to satisfy both of good defoaming ability and high processability.

When the total amount of the CeO₂ component and/or the SnO₂ component in the glass is less than the total amount of the CeO₂ component and/or the SnO₂ component which satisfies the relational expression described above, the defoaming of the glass becomes insufficient, which makes it difficult to obtain the low thermal expansion glass satisfying both of good defoaming ability and high processability.

The SiO₂ component forms a network of the glass and contributes to the low thermal expansion of the glass.

In order to easily obtain an intended average linear expansion coefficient, the lower limit of the content of the SiO₂ component is preferably 48%, more preferably 49%, and most preferably 50%.

Furthermore, in order to further decrease the melting temperature of the glass and to further improve the meltability at lower temperatures, the upper limit of the content of the SiO₂ component is preferably 65%, more preferably 62%, and most preferably 60%.

The Al₂O₃ component forms a framework of the glass together with SiO₂. Furthermore, the Al₂O₃ component has an effect of improving heat resistance and an effect of suppressing phase separation of the glass. When the content of the Al₂O₃ component is less than 8%, the glass phase tends to separate, thus the effect may be insufficient. Therefore, the lower limit of the content of the Al₂O₃ component is preferably 8%, more preferably 9%, and most preferably 9.5%.

Furthermore, when content of the Al₂O₃ component is more than 25%, the meltability remarkably degrades. Therefore, the upper limit of the content of the Al₂O₃ component is preferably 25%, more preferably 24%, and most preferably 23%.

The B₂O₃ component has an effect of decreasing the viscosity of molten glass and the liquidus temperature and thus is preferably included by more than 0%. When the B₂O₃ component is not contained, the moldability tends to degrade due to higher viscosity of the glass and the processability of the glass tends to go down due to higher melting temperatures of the glass. In order to further improve the processability of the glass, the lower limit of the content of the B₂O₃ component is more preferably 1%, and most preferably 1.5%.

Furthermore, when the content of the B₂O₃ component is more than 12%, degradation of chemical resistance of the glass is accelerated. Besides, reboiling tends to generate in the melting process. Therefore, the upper limit of the content of the B₂O₃ component is preferably 12%, more preferably 11.5%, and most preferably 11%.

The CeO₂ component and the SnO₂ component perform as a defoaming agent in the glass I. Particularly, in order to easily obtain a sufficient effect as the defoaming agent by these components, the lower limit of the total amount of one or more of the CeO₂ component and the SnO₂ component is preferably 0.01%, more preferably 0.05%, and most preferably 0.1%.

On the other hand, when the total amount of one or more of the CeO₂ component and the SnO₂ component is more than 3%, the transmittance at a short wavelength range of visible light and ultraviolet light range is lowered since Sn easily deposits as metal or due to the CeO₂ component. Therefore, the upper limit of the total amount of one or more of the CeO₂ component and the SnO₂ component is preferably 3%, more preferably 2.8%, and most preferably 2.5%.

Particularly, when the relational expression of the total amount (γ) of one or more of the CeO₂ component and the SnO₂ component, α and β is satisfied and the total amount of one or more of the CeO₂ component and the SnO₂ component is within the range described above, a higher refining effect is more easily obtainable. In this connection, even when the CeO₂ component and the SnO₂ component are included together, the refining effect on the glass is not shortened; instead, the refining effect is promoted.

The MgO component has an effect of decreasing the viscosity of the glass as well as suppressing devitrification and can be optionally included. In this regard, in order to easily obtain the effect, the lower limit of the content of the MgO component is preferably 10%, more preferably 11%, and most preferably 12%.

Furthermore, when the content of the MgO component is more than 20%, a desired thermal expansion coefficient may not be obtained. Therefore, the upper limit of the content of the MgO component is preferably 20%, more preferably 19%, and most preferably 18%.

The CaO component improves the meltability of the glass at lower temperatures and tends to suppress devitrification and can be optionally included. In this regard, when the content of the CaO component is large, acid resistance of the glass tends to degrade and the average linear expansion coefficient of the glass tends to increase. Therefore, the upper limit of the content of the CaO component is preferably 5%, more preferably 4%, and most preferably 3%.

The BaO component tends to improve the meltability of the glass at lower temperatures and can be optionally included. In this regard, when the content of the BaO component is large, the average linear expansion coefficient of the glass tends to increase. Therefore, the upper limit of the content of the BaO component is preferably 5%, more preferably 4%, and most preferably 3%.

The SrO component tends to improve the meltability of the glass at lower temperatures and can be optionally included. In this regard, when the content of the SrO component is large, the average linear expansion coefficient of the glass tends to increase. Therefore, the upper limit of the content of the SrO component is preferably 5%, more preferably 4%, and most preferably 3%.

The ZnO component tends to improve the meltability of the glass at lower temperatures and can be optionally included. In this regard, when the content of the ZnO component is large, the average linear expansion coefficient of the glass tends to increase. Therefore, the upper limit of the content of the ZnO component is preferably 15%, more preferably 14%, and most preferably 13%.

The ZrO₂ component has an effect of improving chemical resistance of the glass and can be optionally included. In this regard, when the content of the ZrO₂ component is more than 5%, the melting temperature of the glass rises. Therefore, the upper limit of the content of the ZrO₂ component is preferably 5%, more preferably 4%, and most preferably 3.5%.

The TiO₂ component has an effect of improving chemical resistance of the glass and can be optionally included. In this regard, when the content of the TiO₂ component is more than 5%, the melting temperature of the glass rises. Therefore, the upper limit of the content of the TiO₂ component is preferably 5%, more preferably 4%, and most preferably 3%.

The Li₂O component, the Na₂O component and the K₂O component has an effect of improving meltability of the glass and can be optionally included. In this regard, when the total amount of one or more selected from the Li₂O component, the Na₂O component and the K₂O component is more than 10%, it is difficult to obtain a desired thermal expansion coefficient. Therefore, the upper limit of the total amount of one or more of these components is preferably 10%, more preferably 8%, and most preferably 6%.

By including one or more components selected from the Li₂O component, the Na₂O component and the K₂O component, electric conductivity of the molten glass increases, therefore, direct resistance heating can be carried out by energizing the molten glass. Use of burners for heating is reduced by the direct resistance heating, and incorporation of OH groups into the molten glass due to combustion by the burners is cut down. Therefore, degradation of chemical or physical resistance of the glass due to incorporation of OH groups is likely to be prevented.

Y₂O, La₂O₃, Gd₂O₃, Bi₂O₃, WO₃, Nb₂O₅ and Ta₂O₅ components have an effect of improving meltability of the glass and decreasing the liquidus temperature of the glass and can be optionally included. In this regard, when the total amount of these components is more than 7%, the average linear expansion coefficient increases. Therefore, the upper limit of the total amount of one or no less than two of these components is preferably 7%, more preferably 6.8%, and most preferably 6.5%.

F, Cl, Br, I, Pb, As and Sb elements are environmentally harmful thus preferably not included as a component to form the glass.

The temperature at which the glass I described above exhibits a viscosity of 10^{2.5} dPa·s is preferably no higher than 1450°C, more preferably no higher than 1440°C, and most preferably no higher than 1430°C. Thereby, the temperature at which the furnace when producing the glass decreases, and thus costs associated with energy required to operate and production installations can be reduced.

It is also preferable in the glass I described above that the average linear expansion coefficient of from 0°C to 300°C is in the range of 25×10⁻⁷ °C⁻¹ to 55×10⁻⁷ °C⁻¹. The upper limit of the average linear expansion coefficient is 55×10⁻⁷ °C⁻¹, more preferably 54×10⁻⁷ °C⁻¹, and most preferably 53×10⁻⁷ °C⁻¹.

Next, the glass II is explained below.

The glass II includes an SiO₂ component, an Al₂O₃ component, a CeO₂ component and/or an SnO₂ component, on an oxide basis, in which the content of B₂O₃ component is less than 0.1%, the total amount (γ) of the CeO₂ component and/or the SnO₂ component satisfies the relationship represented by the following expression:
γ ≥ 0.005α-5.25 (in which α represents the liquidus temperature).

The SiO₂ component and/or the Al₂O₃ component is a main component of the low thermal expansion glass, and the CeO₂ component and/or the SnO₂ component brings about an effect as a refining agent.

Furthermore, in the glass II, the content of B₂O₃ component, which causes degradation in chemical resistance, is less than 0.1%.

Then, in relation to the liquidus temperature of the glass which depends on the SiO₂ component and/or the Al₂O₃ component and optional components included as necessary, a refining agent is included so that the total amount of the CeO₂ component and/or the SnO₂ component satisfies the relational expression described above, consequently good refining effect is exerted even when not containing the As component or the Sb component, thereby enabling to provide the low thermal expansion glass having excellent chemical resistance.

When the total amount of the CeO₂ component and/or the SnO₂ component in the glass is less than the total amount of the CeO₂ component and/or the SnO₂ component which satisfies the relational expression described above, the refining of the glass become insufficient, which makes difficult to obtain the low thermal expansion glass having a good refining effect.

The SiO₂ component forms a network of the glass and contributes to the low thermal expansion of the glass.

In order to easily obtain an intended average linear expansion coefficient, the lower limit of the content of the SiO₂ component is preferably 45%, more preferably 47%, and most preferably 49%.

In order to further decrease the melting temperature of the glass and to further improve the meltability at lower temperatures, the upper limit of the content of the SiO₂ component is preferably 68%, more preferably 67%, and most preferably 66%.

The Al₂O₃ component forms a framework of the glass together with SiO₂. Furthermore, the Al₂O₃ component has an effect of improving heat resistance and an effect of suppressing phase separation of the glass. When the content of the Al₂O₃ component is less than 16%, the glass phase tends to separate, thus the effect may be insufficient. Therefore, the lower limit of the content of the Al₂O₃ component is preferably 16%, more preferably 17%, and most preferably 18%.

Furthermore, when content of the Al₂O₃ component is more than 35%, the meltability remarkably degrades. Therefore, the upper limit of the content of the Al₂O₃ component is more preferably 34%, and most preferably 33%.

The CeO₂ component and the SnO₂ component perform as a refining agent in the glass II. Particularly, in order to easily obtain a sufficient effect as the refining agent by these components, the lower limit of the total amount of one or more of the CeO₂ component and the SnO₂ component is preferably 0.01%, more preferably 0.05%, and most preferably 0.1%.

On the other hand, when the total amount of one or more of the CeO₂ component and the SnO₂ component is more than 3%, the transmittance at a short wavelength range of visible light and ultraviolet light range is lowered since Sn easily deposits as metal or due to the CeO₂ component. Therefore, the upper limit of the total amount of one or more of the CeO₂ component and the SnO₂ component is preferably 3%, more preferably 2.8%, and most preferably 2.5%.

Particularly, when the relational expression of the total amount (γ) of one or more of the CeO₂ component and the SnO₂ component and α is satisfied and the total amount of one or more of the CeO₂ component and the SnO₂ component is within the range described above, a higher refining effect is more easily obtainable. In this connection, even when the CeO₂ component and the SnO₂ component are included together, the refining effect on the glass is not impaired; instead, the refining effect is promoted.

The R₂O component (in which R represents one or more of Li, Na and K) has an effect of improving the meltability of the glass and thus can be optionally included. In this regard, when the total amount of one or more of these components is more than 5%, it is difficult to obtain a desired thermal expansion coefficient. Therefore, the upper limit of the total amount of one or more of these components is preferably 5%, more preferably 4.6%, and most preferably 4.4%.

In this connection, by including one or more components selected from the Li₂O component, the Na₂O component and the K₂O component, electric conductivity of the molten glass increases, therefore, direct resistance heating can be carried out by energizing the molten glass. Use of burners for heating is reduced by the direct resistance heating, and incorporation of OH groups into the molten glass due to combustion by the burners is cut down. Therefore, degradation of chemical or physical resistance of the glass due to incorporation of OH groups is likely to be prevented.

The P₂O₅ component has an effect of lowering the viscosity of the glass and can be optionally included. In this regard, when the content of the P₂O₅ component is large, the acid resistance of the glass tends to degrade and the average linear expansion coefficient of the glass tends to increase. Therefore, the upper limit of the content of the P₂O₅ component is preferably 10%, more preferably 9%, and most preferably 8%.

The MgO component has an effect of decreasing the viscosity of the glass as well as suppressing devitrification and can be optionally included. In this regard, when the content of the MgO component is more than 12%, a desired thermal expansion coefficient is not obtainable. Therefore, the upper limit of the content of the MgO component is preferably 12%, more preferably 11.5%, and most preferably 11%.

The CaO component improves the meltability of the glass at lower temperatures and tends to suppress devitrification and can be optionally included. In this regard, when the content of the CaO component is large, the acid resistance of the glass tends to degrade and the average linear expansion coefficient of the glass tends to increase. Therefore, the upper limit of the content of the CaO component is preferably 12%, more preferably 11%, and most preferably 10.5%.

The SrO component tends to improve the meltability of the glass at lower temperatures and can be optionally included. In this regard, when the content of the SrO component is large, the average linear expansion coefficient of the glass tends to increase. Therefore, the upper limit of the content of the SrO component is preferably 8%, more preferably 7.5%, and most preferably 7%.

The BaO component tends to improve the meltability of the glass at lower temperatures and can be optionally included. In this regard, when the content of the BaO component is large, the average linear expansion coefficient of the glass tends to increase. Therefore, the upper limit of the content of the BaO component is preferably 8%, more preferably 7.5%, and most preferably 7%.

The ZrO₂ component has an effect of improving chemical resistance of the glass and can be optionally included. In this regard, when the content of the ZrO₂ component is more than 5%, the melting temperature of the glass rises. Therefore, the upper limit of the content of the ZrO₂ component is preferably 5%, more preferably 4%, and most preferably 3.5%.

The ZnO component tends to improve the meltability of the glass at lower temperatures and can be optionally included. In this regard, when the content of the ZnO component is large, the average linear expansion coefficient of the glass tends to increase. Therefore, the upper limit of the content of the ZnO component is preferably 5%, more preferably 4%, and most preferably 3%.

The TiO₂ component has an effect of improving chemical resistance of the glass and can be optionally included. In this regard, when the content of the TiO₂ component is more than 5%, the melting temperature of the glass rises. Therefore, the upper limit of the content of the TiO₂ component is preferably 5%, more preferably 4%, and most preferably 3%.

Y₂O₃, La₂O₃, Gd₂O₃, Nb₂O₅, Ta₂O₅, Bi₂O₃ and WO₃ components provide an effect of lowering the liquidus temperature of the glass and decreasing the viscosity while maintaining an intended average linear expansion coefficient and can be optionally included. In this regard, when the total amount of these components is large, the stability of the glass is impaired and the average linear expansion coefficient increases. Therefore, the upper limit of the total amount of one or no less than two of these components is preferably 7%, more preferably 6%, and most preferably 5%.

F, Cl, Br, I, Pb, As and Sb elements are environmentally harmful thus preferably not included as a component to form the glass.

It is preferable in the glass II described above that the average linear expansion coefficient of from 0°C to 300°C is in the range of 25×10⁻⁷ °C⁻¹ to 55×10⁻⁷ °C⁻¹. The upper limit of the average linear expansion coefficient is 55×10⁻⁷ °C⁻¹, more preferably 52×10⁻⁷ °C⁻¹, and most preferably 50×10⁻⁷ °C⁻¹.

### EXAMPLES

The glass of the present invention is explained with reference to specific examples below.

In regards to the glasses of Examples of the present invention and Comparative Examples, raw materials of oxides, carbonates, nitrates, etc. were mixed so that the glasses have the compositions of Tables 1 to 9 and the weight of each of the glasses is 2,000 grams. These raw materials were dissolved at a temperature of about 1300°C to 1550°C for 24 to 72 hours using a usual melting apparatus and shaped into a mass through stirring and homogenizing, followed by distortion elimination to obtain a glass shaped body. Thereafter, the glass was processed into a shape of 10×10×1 cm and the surface was polished to a mirror finish, then interior portion of the glass was observed by a microscope to examine the number of bubbles. In this connection, the minimum size (diameter) of detectable bubbles was 10 µm. Furthermore, each of the resulting glasses was measured for the average linear expansion coefficient (α) of from 0°C to 300°C and the liquidus temperature. Besides, the glass I was measured for the temperature (T) at which the glass exhibits a viscosity of 10^{2.5} dPa·s and the glass II was measured for a glass transition temperature (Tg). These values are described in Tables along with the number of bubbles.

In this connection, the average linear expansion coefficient is a value which was measured by changing the temperature in the range of from 0°C to 300°C in accordance with "Measuring method for average linear thermal expansion coefficient of optical glass at near room temperature" described in JOGIS (Japanese Optical Glass Industrial Standards) 16-2003.

The temperature (T) at which the glass exhibits a viscosity of 10^{2.5} dPa·s is a value measured by using a ball raising type high-temperature viscometer (Model BVM-13LH, manufactured by OPT Co.).

The glass transition temperature is a value measured in accordance with "Measuring method for thermal expansion of optical glass" described in JOGIS (Japanese Optical Glass Industrial Standards) 08-2003.

**[Table 1]**

| Examples (% by mass) | 1-1 | 1-2 | 1-3 | 1-4 | 1-5 | 1-6 | 1-7 |
|---|---|---|---|---|---|---|---|
| SiO₂ | 53.0 | 56.9 | 58.8 | 59.0 | 50.7 | 55.8 | 50.0 |
| B₂O₃ | 2.0 | 1.9 | 1.8 | 4.5 | 9.5 | 5.3 | 4.0 |
| Al₂O₃ | 18.0 | 17.1 | 16.4 | 16.4 | 17.1 | 18.9 | 22.0 |
| Na₂O | 4.0 | 3.8 | 3.6 | 0.9 | 1.0 | 1.1 | 1.0 |
| MgO | 15.0 | 14.3 | 13.6 | 13.7 | 14.3 | 10.5 | 15.0 |
| CaO | 2.0 | 1.9 | 1.8 | 1.8 | 1.9 | 2.1 | 2.0 |
| BaO | 2.0 | 1.9 | 1.8 | 1.8 | 1.9 | 2.1 | 2.0 |
| ZrO₂ | 3.0 | 1.0 | 0.9 | 0.9 | 2.8 | 3.2 | 3.0 |
| CeO₂ | 0.5 | 1.2 | 0.8 | 1.5 | 1.0 | | 0.5 |
| SnO₂ | | | 0.5 | | 1.0 | 1.0 | 0.5 |
| Total | 100.0 | 100.0 | 100.0 | 100.0 | 100.0 | 100.0 | 100.0 |
| α(×10⁻⁷°C⁻¹) | 52.3 | 50.9 | 47.9 | 41.1 | 43.2 | 38.6 | 43.5 |
| Liquidus Temperature (°C) | 1140 | 1150 | 1180 | 1160 | 1080 | 1140 | 1120 |
| T at 10^{2.5}dPa·s (°C) | 1330 | 1350 | 1360 | 1360 | 1290 | 1290 | 1330 |
| Number of Bubbles in 100 cm³ of Glass | 18 | 12 | 18 | 23 | 15 | 22 | 13 |

**[Table 2]**

| Examples (% by mass) | 1-8 | 1-9 | 1-10 | 1-11 | 1-12 | 1-13 |
|---|---|---|---|---|---|---|
| SiO₂ | 59.0 | 57.1 | 56.2 | 55.0 | 61.9 | 54.0 |
| B₂O₃ | 3.5 | 8.5 | 9.0 | 10.0 | 9.0 | 8.0 |
| Al₂O₃ | 10.5 | 17.0 | 22.0 | 12.0 | 10.0 | 20.0 |
| Li₂O | | 0.3 | 0.1 | | | 1.0 |
| Na₂O | 1.0 | 0.8 | 0.7 | 3.5 | 2.5 | 0.0 |
| K₂O | | | | | 1.0 | 1.5 |
| ZnO | | 2.0 | 3.0 | 12.5 | 10.5 | 7.0 |
| MgO | 18.0 | 5.5 | 7.0 | | 3.0 | 7.5 |
| CaO | 2.0 | | | 2.0 | | |
| BaO | 2.0 | | | 1.0 | 1.5 | 1.0 |
| ZrO₂ | | | | | 1.5 | |
| Y₂O₃ | 2.0 | 6.4 | | 2.0 | | |
| CeO₂ | 1.0 | 1.2 | 1.5 | 2.0 | | 2.5 |
| SnO₂ | 1.0 | 1.2 | 1.5 | | 2.5 | |
| Total | 100.0 | 100.0 | 100.0 | 100.0 | 100.0 | 100.0 |
| α(×10⁻⁷°C⁻¹) | 43.4 | 35.2 | 37 | 40.5 | 42.1 | 35.3 |
| Liquidus Temperature (°C) | 1180 | 1210 | 1230 | 1100 | 1220 | 1300 |
| T at 10^{2.5}dPa·s (°C) | 1280 | 1360 | 1360 | 1340 | 1430 | 1450 |
| Number of Bubbles in 100 cm³ of Glass | 18 | 45 | 30 | 29 | 40 | 35 |

**[Table 3]**

| Comparative Examples (% by mass) | 1-1 | 1-2 | 1-3 |
|---|---|---|---|
| SiO₂ | 55.0 | 60.5 | 58.2 |
| B₂O₃ | 6.8 | 4.9 | 6.9 |
| Al₂O₃ | 16.3 | 13.2 | 17.4 |
| Li₂O | 0.2 | | |
| Na₂O | 0.5 | 1.0 | 0.5 |
| K₂O | | 0.6 | |
| ZnO | 7.6 | 4.9 | 8.3 |
| MgO | 5.5 | 5.4 | 6.0 |
| CaO | | 4.0 | |
| BaO | 2.0 | 1.0 | 2.4 |
| ZrO₂ | | 0.5 | |
| TiO₂ | 6.0 | 3.8 | |
| CeO₂ | 0.1 | 0.2 | 0.3 |
| SnO₂ | | | |
| Total | 100 | 100 | 100 |
| α(×10⁻⁷°C⁻¹) | - | - | - |
| Liquidus Temperature (°C) | 1160 | 1180 | 1140 |
| T at 10^{2.5} dPa·s (°C) | - | - | - |
| Number of Bubbles in 100 cm³ of Glass | 210 | 130 | 140 |

Tables 1 and 2 show Examples of the glass I of the present invention and Table 3 shows Comparative Examples. As shown in Tables described above, in Examples of the glass I of the present invention, the average linear expansion coefficient (α) of from 0°C to 300°C was in the range of 35.2 to 52.3 (×10⁻⁷ °C⁻¹). Furthermore, in Examples of the glass I of the present invention, the relationship represented by the following expression: γ ≥ 0.005α+0.0189β²+0.011β-5.5 (in which α represents the liquidus temperature; and β represents the content of B₂O₃ component) is satisfied and the number of remaining bubbles in 100 cm³ of glass is 12 to 45, resulting in a refining property not inferior to the cases where the As component and/or the Sb component is used in a large amount.

### (Comparative Examples)

On the other hand, in Comparative Examples 1-1 to 1-3, the number of remaining bubbles in 100 cm³ of glass was observed such that the number of remaining bubbles was 130 to 210. For example, in Comparative Example 1-1, since the content of B₂O₃ is 6.8% and the liquidus temperature is 1160°C, above-noted 0.005α+0.0189β²+0.011β-5.5 substituted by α=1160 and β=6.8 comes to γ ≥ 1.249. Meanwhile, the content of the CeO₂ component, which corresponds to γ of Comparative Example 1-1, is 0.1; thus it is believed that a sufficient defoaming effect is not obtainable since the relationship is not satisfied. Similarly, the relational expression comes to (γ =) 0.2 ≥ 0.908 and (γ =) 0.3 ≥ 1.593 respectively in Comparative Examples 1-2 and 1-3; thus it is believed that a sufficient defoaming effect is not obtainable since the relationship is not satisfied.

**[Table 4]**

| Examples (% by mass) | 2-1 | 2-2 | 2-3 | 2-4 | 2-5 | 2-6 | 2-7 | 2-8 |
|---|---|---|---|---|---|---|---|---|
| SiO₂ | 58.8 | 54 | 54.3 | 64 | 57.8 | 54 | 59.7 | 62 |
| Al₂O₃ | 24 | 31 | 29.5 | 22 | 22.5 | 27.8 | 24 | 22.8 |
| MgO | 7 | 4.3 | 5 | 2 | 8 | 5 | 6.5 | 7.5 |
| CaO | 2 | 3.2 | 3 | 3.5 | 4.2 | 4 | 4 | 4.5 |
| SrO | 6.7 | 5 | 2 | 0.3 | 1 | 1.2 | | |
| BaO | | | 4.7 | 1.7 | 2 | 2 | 2.5 | 2.4 |
| ZnO | | | | | 3 | | | |
| Y₂O₃ | | | | 5 | | | | |
| La₂O₃ | | | | | | 2 | | |
| Ta₂O₅ | | | | | | | 2 | |
| WO₃ | | | | | | 2.5 | | |
| CeO₂ | 1.5 | 2.5 | 1.5 | 0.5 | | 0.5 | | 0.8 |
| SnO₂ | | | | 1 | 1.5 | 1 | 1.3 | |
| Total | 100 | 100 | 100 | 100 | 100 | 100 | 100 | 100 |
| Tg (°C) | 795 | 815 | 800 | 790 | 785 | 785 | 810 | 800 |
| α(×10⁻⁷ °C⁻¹) | 31 | 36 | 37 | 35 | 38 | 39 | 35 | 35 |
| Liquidus Temperature (°C) | 1290 | 1300 | 1295 | 1295 | 1300 | 1290 | 1280 | 1190 |
| Number of Bubbles in 100 cm³ of Glass | 24 | 18 | 30 | 20 | 22 | 24 | 35 | 42 |

**[Table 5]**

| Examples (% by mass) | 2-9 | 2-10 | 2-11 | 2-12 | 2-13 |
|---|---|---|---|---|---|
| SiO₂ | 61 | 59 | 58 | 58 | 60 |
| Al₂O₃ | 23.5 | 25 | 25 | 24 | 24.3 |
| MgO | 7 | 6 | 6.2 | 5 | 5.5 |
| CaO | 3 | 5.6 | 7.5 | 7.8 | 6.5 |
| SrO | | 2.4 | | 1 | 1.2 |
| BaO | 2.5 | | 1.3 | 2.2 | 1 |
| TiO₂ | 1 | | | | |
| CeO₂ | 1.5 | 2 | 1 | 1 | |
| SnO₂ | 0.5 | | 1 | 1 | 1.5 |
| Total | 100 | 100 | 100 | 100 | 100 |
| Tg (°C) | 800 | 795 | 790 | 790 | 790 |
| α(×10⁻⁷°C⁻¹) | 35 | 37 | 39 | 38 | 37 |
| Liquidus Temperature (°C) | 1280 | 1260 | 1270 | 1280 | 1265 |
| Number of Bubbles in 100 cm³ of Glass | 14 | 16 | 12 | 18 | 26 |

**[Table 6]**

| Examples (% by mass) | 2-14 | 2-15 | 2-16 | 2-17 | 2-18 | 2-19 | 2-20 | 2-21 |
|---|---|---|---|---|---|---|---|---|
| SiO₂ | 61 | 58 | 51 | 52 | 52.8 | 54 | 54 | 53 |
| Al₂O₃ | 24.5 | 24 | 32 | 25 | 26 | 24.5 | 25 | 25.5 |
| P₂O₅ | | | 5 | 8 | 3 | 5 | 4 | 2 |
| MgO | 7 | 5 | 5.5 | 7.5 | 10.7 | 7 | 4 | 3 |
| CaO | 3 | 8 | 3 | 1.8 | 1.5 | 5 | 2 | 8 |
| SrO | 0 | 1 | 1.5 | 0.5 | 0.5 | 2.5 | 5 | 1 |
| BaO | 2.5 | 2 | | 0.7 | 0.5 | | 1 | 3 |
| TiO₂ | 1 | | | | | | | |
| ZrO₂ | | | | 3 | | | | |
| Y₂O₃ | | | | | 4 | | | |
| Ta₂O₅ | | | | | | | 3 | |
| WO₃ | | | | | | | | 3 |
| CeO₂ | 0.5 | 1 | 1.5 | 1.5 | | 2 | | 1.5 |
| SnO₂ | 0.5 | 1 | 0.5 | | 1 | | 2 | |
| Total | 100 | 100 | 100 | 100 | 100 | 100 | 100 | 100 |
| Tg (°C) | 810 | 780 | 820 | 800 | 798 | 780 | 780 | 794 |
| α(×10⁻⁷ °C⁻¹) | 34 | 38 | 37 | 38 | 37 | 35 | 37 | 44 |
| Liquidus Temperature (°C) | 1283 | 1280 | 1210 | 1250 | 1210 | 1220 | 1210 | 1190 |
| Number of Bubbles in 100 cm³ of Glass | 45 | 25 | 28 | 30 | 42 | 18 | 26 | 16 |

**[Table 7]**

| Examples (% by mass) | 2-22 | 2-23 | 2-24 | 2-25 | 2-26 | 2-27 | 2-28 |
|---|---|---|---|---|---|---|---|
| SiO₂ | 52 | 58 | 55.3 | 62.1 | 58.6 | 57 | 56 |
| Al₂O₃ | 27 | 26 | 25 | 25 | 18 | 20 | 20 |
| P₂O₅ | 3 | 3 | 2 | 1.2 | 1.5 | 2 | 2 |
| Na₂O | | | 0.5 | 0.5 | | 3 | |
| K₂O | | | 1 | 0.5 | | | 2 |
| MgO | 3 | 3 | 2 | 1.2 | 9 | 6 | 5.5 |
| CaO | 5 | 5 | 7 | 3 | 10 | 6.5 | 7 |
| SrO | 3 | 1 | 2.2 | | | | |
| BaO | 2 | | | 1.5 | | 4 | 6 |
| ZnO | 3 | | 3 | 3 | | | |
| TiO₂ | | 2 | | | | | |
| Y₂O₃ | | | | | 0.5 | | |
| CeO₂ | 1 | | 1.5 | 0.5 | 0.8 | 1.5 | 0.5 |
| SnO₂ | 1 | 2 | 0.5 | 1.5 | 1.6 | | 1 |
| Total | 100 | 100 | 100 | 100 | 100 | 100 | 100 |
| Tg (°C) | 795 | 810 | 770 | 790 | 760 | 750 | 755 |
| α(×10⁻⁷°C⁻¹) | 38 | 36 | 46 | 35 | 45 | 46 | 47 |
| Liquidus Temperature (°C) | 1210 | 1290 | 1200 | 1220 | 1210 | 1200 | 1210 |
| Number of Bubbles in 100 cm³ of Glass | 23 | 31 | 15 | 26 | 25 | 16 | 20 |

**[Table 8]**

| Examples (% by mass) | 2-29 | 2-30 | 2-31 | 2-32 | 2-33 |
|---|---|---|---|---|---|
| SiO₂ | 63.5 | 65 | 53.8 | 52.5 | 62 |
| Al₂O₃ | 25 | 24 | 21 | 23 | 22 |
| P₂O₅ | | | 8 | 3 | |
| Li₂O | 4 | 4.3 | 4.2 | | |
| Na₂O | 0.8 | 0.3 | 1 | | |
| K₂O | | 0.3 | 2 | | |
| MgO | 1 | 1.3 | 3 | 7 | |
| CaO | 1 | | | 5 | 5.5 |
| SrO | | 1 | | 2.5 | 0.5 |
| BaO | | | | | 3.7 |
| ZnO | 2 | 0.6 | | | |
| ZrO₂ | 1.2 | 1 | | | |
| Y₂O₃ | | | | | 5 |
| Nb₂O₅ | | | | 5 | |
| Bi₂O₃ | | | 5 | | |
| CeO₂ | 1 | 1.5 | 1 | 2 | 0.5 |
| SnO₂ | 0.5 | 0.7 | 1 | | 1 |
| Total | 100 | 100 | 100 | 100 | 100 |
| Tg (°C) | 710 | 690 | 705 | 760 | 790 |
| α(×10⁻⁷°C⁻¹) | 45 | 46 | 44 | 38 | 35 |
| Liquidus Temperature (°C) | 1320 | 1330 | 1320 | 1200 | 1295 |
| Number of Bubbles in 100 cm³ of Glass | 35 | 32 | 26 | 32 | 20 |

**[Table 9]**

| Comparative Examples (% by mass) | 2-1 | 2-2 |
|---|---|---|
| SiO₂ | 67 | 67 |
| Al₂O₃ | 24 | 23.5 |
| Li₂O | 4.2 | 4.25 |
| Na₂O | 1 | 0.6 |
| K₂O | 0 | 0.25 |
| MgO | 1 | 1.3 |
| CaO | 1 | |
| SrO | | 1 |
| ZnO | 0.6 | 0.6 |
| ZrO₂ | 0.7 | 1 |
| SnO₂ | 0.5 | 0.5 |
| Total | 100 | 100 |
| Tg (°C) | 708 | 706 |
| α(×10⁻⁷°C⁻¹) | 45 | 44 |
| Liquidus Temperature (°C) | 1323 | 1332 |
| Number of Bubbles in100 cm³ of Glass | 150 | 170 |

Tables 4 to 8 show Examples of the glass II of the present invention and Table 9 shows Comparative Examples. As shown in Tables described above, in Examples of the glass II of the present invention, the average linear expansion coefficient (α) of from 0°C to 300°C was in the range of 31×10⁻⁷ to 47×10⁻⁷/°C. Furthermore, the glass transition temperature Tg (°C) was in the range of 700°C to 800°C. Furthermore, in Examples of the glass II of the present invention, the relationship represented by the following expression: γ ≥ 0.005α-5.25 (in which α represents the liquidus temperature) is satisfied. Furthermore, the number of remaining bubbles in 100 cm³ of glass is 12 to 45, which resulting in a refining property not inferior to the cases where the As component and/or the Sb component is used in a large amount.

### (Comparative Examples)

On the other hand, in Comparative Examples 2-1 to 2-2, the number of remaining bubbles in 100 cm³ of glass was observed such that the number of remaining bubbles was 150 to 170. Since the liquidus temperature in Comparative Example 2-1 is 1323°C, the value of above-noted 0.005α-5.25 comes to 1.365. Meanwhile, the value γ in Comparative Example 2-1 is 0.5; thus it is believed that a sufficient defoaming effect is not obtainable since the relationship is not satisfied. Similarly, the relational expression comes to (γ =) 0.5 ≥ 1.410 in Comparative Example 2-2; thus it is believed that a sufficient defoaming effect is not obtainable since the relationship is not satisfied.

## Claims

1. A glass, comprising
an SiO₂ component, an Al₂O₃ component, a CeO₂ component and/or an SnO₂ component, on an oxide basis, wherein
the total amount (γ) of the CeO₂ component and/or the SnO₂ component satisfies the relationship represented by the following expression:
γ ≥ 0.005α+Aβ²+Bβ+C, wherein α represents the liquidus temperature ; β represents the content of B₂O₃ component; A represents a coefficient of 0 or greater; B represents a coefficient of 0 or greater; and C represents a constant.

2. The glass according to claim 1, comprising
the SiO₂ component, the Al₂O₃ component, a B₂O₃ component, the CeO₂ component and/or the SnO₂ component, on an oxide basis, wherein
the total amount (γ) of the CeO₂ component and/or the SnO₂ component satisfies the relationship represented by the following expression:
γ ≥ 0.005α+0.0189β²+0.011β-5.5, wherein α represents the liquidus temperature; and β represents the content of the B₂O₃ component.

3. The glass according to claim 2, wherein
the SiO₂ component is included in an amount of 48% to 65%,
the Al₂O₃ component is included in an amount of 8% to 25% and
the B₂O₃ component is included in an amount of more than 0% to 12% or less, on an oxide basis in % by mass.

4. The glass according to claim 2 or 3, wherein
the CeO₂ component and/or the SnO₂ component is included in an amount of 0.01% to 3% on an oxide basis in % by mass.

5. The glass according to any one of claims 2 to 4, further comprising
a CaO component in an amount of 0% to 5%, and/or
an MgO component in an amount of 0% to 20%, and/or
a BaO component in an amount of 0% to 5%, and/or
a SrO component in an amount of 0% to 5%, and/or
a ZnO component in an amount of 0% to 15%, and/or
a ZrO₂ component in an amount of 0% to 5%, and/or
a TiO₂ component in an amount of 0% to 5% and/or
0% to 10% in a total amount of one or more components selected from a Li₂O component, a Na₂O component and a K₂O component, on an oxide basis in % by mass.

6. The glass according to any one of claims 2 to 5, further comprising
in the range of 0% to 7% in a total amount of one or no less than two of Y₂O₃, La₂O₃, Gd₂O₃, Bi₂O₃, WO₃, Nb₂O₅ and Ta₂O₅ on an oxide basis in % by mass.

7. The glass according to any one of claims 2 to 6,
wherein the temperature at which the glass exhibits a viscosity of 10^{2.5} dPa·s is no higher than 1450°C.

8. The glass according to claim 1, comprising
the SiO₂ component, the Al₂O₃ component, the CeO₂ component and/or the SnO₂ component, on an oxide basis in % by mass, wherein the content of the B₂O₃ component is less than 0.1%, and
the total amount (γ) of the CeO₂ component and/or the SnO₂ component satisfies the relationship represented by the following expression:
γ ≥ 0.005α-5.25, wherein α represents the liquidus temperature.

9. The glass according to claim 8, wherein
the SiO₂ component is included in an amount of 45% to 68% and
the Al₂O₃ component is included in an amount of 16% to 35%, on an oxide basis in % by mass.

10. The glass according to claim 8 or 9, wherein
the CeO₂ component and/or the SnO₂ component is included in an amount of 0.01% to 3%, on an oxide basis in % by mass.

11. The glass according to any one of claims 8 to 10, further comprising
an R₂O component in an amount of less than 5% on an oxide basis in % by mass, wherein R represents one or more of Li, Na and K.

12. The glass according to any one of claims 8 to 11, further comprising
a P₂O₅ component in an amount of 0% to 10%, and/or
an MgO component in an amount of 0% to 12%, and/or
a CaO component in an amount of 0% to 12%, and/or
a SrO component in an amount of 0% to 8% and/or
a BaO component in an amount of 0% to 8%, on an oxide basis in % by mass.

13. The glass according to any one of claims 8 to 12, further comprising
a ZrO₂ component in an amount of 0% to 5%, and/or
a ZnO component in an amount of 0% to 5%, and/or
a TiO₂ component in an amount of 0% to 5%, and/or
0% to 7% in a total amount of one or more components selected from Y₂O₃, La₂O₃, Gd₂O₃, Nb₂O₅, Ta₂O₅, Bi₂O₃ and WO₃ components, on an oxide basis in % by mass.

14. The glass according to any one of claims 1 to 13,
wherein the average linear expansion coefficient of from 0°C to 300°C is 25×10⁻⁷ °C⁻¹ to 55×10⁻⁷ °C⁻¹.

15. The glass according to any one of claims 1 to 14, not comprising
F, Cl, Br, I, Pb, As or Sb element as a component comprising in the glass.
